# EUROPEAN PATENT APPLICATION

(11) **EP 1 595 922 A2**
(43) Date of publication of application: **16.11.2005**
(21) Application number: 05013328.9
(22) Date of filing: 08.12.2003
(51) Int. Cl.: C09D 11/00

(54) **Ink jet ink**

(30) Priority: 11.12.2002 US 432240 P; 03.02.2003 US 444183 P
(62) Divisional of application: 03778715.7
(71) Applicant: Creo IL. Ltd., Herzlia 46103 (IL)
(72) Inventor: Figov, Murray, Ra'anana 43213 (IL)
(74) Representative: White, Duncan Rohan

(57) **Abstract**

The invention relates to ink for an inkjet printer. The inkjet ink comprises a switchable material. Examples of the switchable material include Ferric Nitrate, sulphonic acid and polycrilic acid

## Description

### FIELD OF THE INVENTION

The invention relates to offset lithographic printing blanks which may be imaged using ink jet imaging techniques to produce printing plates that are then used to make multiple impressions on standard offset lithographic printing presses.

### CROSS-REFERENCE TO RELATED PATENT APPLICATIONS

This patent application claims priority from and is related to U.S. Provisional Patent Application Serial Number 60/ 432,240, filed December 11, 2002, and to U.S. Provisional Patent Application Serial Number 60/444,183, filed February 3, 2003, these U.S. Provisional Patent Applications incorporated by reference in their entirety herein.

### BACKGROUND OF THE INVENTION

Offset lithographic printing has remained a most popular method of printing for many years. An important reason for this is the relative ease with which offset lithographic printing plates can be produced. Currently, the most widely used method for plate preparation is that which utilizes specially prepared masking films through which pre-sensitised printing blanks are selectively hardened or softened (according to the chemistry of the plate) by exposure to ultra violet light. The plate then undergoes a development process, during which the more soluble regions of the coating on the plate are washed away. A detailed description of the system and the plates used can be found in Chapter 20 of the book "Printing Materials: Science and Technology" by Bob Thompson 1998, published by Pira.

In recent years, various considerations have arisen that point to advantages for modification of hitherto generally accepted practices. With the advent of computers, information for printing is prepared digitally and it has become preferable to use this digital information as directly as possible in plate preparation. One obvious way would be to eliminate the masking film. Not only are these films a source of expense, but the most widely used films are based on silver chemistry whereby the exposure and handling of the film must be in a light-excluding environment. In addition, the exposed film must be processed with chemical solutions which are unstable, messy and environmentally problematic. One answer is to be found in computer-to-plate systems whereby the offset litho plates are directly imaged with a light source which is modulated to correspond to the digital information from the computer. Thus the film intermediate is completely eliminated. In general, such plates still need processing by solution although attempts are being made to develop computer-to-plate systems that are processless. The subject of computer-to-plate can be found in the above quoted book in Chapter 21.

US Pat. No. 5,339,737 to Lewis et al describes the processless preparation of offset litho printing plates, wherein the upper layer or layers of the plate are ablated away. The upper layer is either oleophobic for waterless plates or hydrophilic for conventional wet process plates. The substrate is oleophilic in both cases. US Pat. No. 5,353,705 (Lewis et al) is similar to the previous patent but describes additional layers for secondary partial ablation. US Pat. No. 5,487,338 is similar but includes reflective layers. All of these inventions involve multiple layered plates which are expensive to produce. Also it is more difficult to maintain a consistent standard of quality from plate to plate if multiple coating is employed in the manufacturing process. Moreover, the above patents utilize laser imaging systems which are in themselves costly.

In order to simplify further description, the unimaged plate will be described as a printing blank. The plate with an image will be described as the printing plate. It is obviously desirable to have a plate-making process with the utmost simplicity, the elimination of all chemical processing and a minimal cost for the equipment for the imaging of the blank and for any procedure followed in order to arrive at a printing plate that is fully prepared from such printing blank.

A technology that has been rapidly maturing in recent years may be seen to offer solutions to easy and inexpensive plate production. This is the technology of inkjet printing.

Inkjet is a non-impact printing process whereby ink is squirted through very fine nozzles and the resultant ink droplets form an image directly on a substrate. There are two main types of ink jet. In one process, usually termed continuous ink-jet (CIJ) printing, a stream of ink drops are electrically charged and then are deflected by an electric field either directly or indirectly onto the substrate. The viscosity of inks used in such systems is typically 2 or 3 centipoises. In the second process, usually called Drop on Demand (DOD) ink-jet printing, the ink supply is regulated by an actuator such as a piezoelectric. The pressure produced during the actuation forces a droplet through a nozzle onto the substrate. Contrary to what is required for CIJ inks, inks for DOD ink-jet printing do not need to be electrically conductive and their viscosity is typically between 2 and 40 centipoises.

The application of inkjet to produce printing plates is an idea which can be traced back to the origins of the inkjet process. In US Pat. No. 2,512,743 assigned to the Radio Corporation of America, Clarence W. Hansell, the inventor of the DOD method, described in this patent wrote "The invention may also be used for spraying acids and chemicals for etching of printing plates.....". Although the general concept was disclosed here, no further details were given. US Pat. No. 4,003,312 by Gunther details methods of inkjet offset lithographic platemaking, but the plate substrate is confined to silicone surfaces for driographic (waterless) printing which had been at that time recently invented (see US Pat. No. 3,511,178 - Curtin). UK Patent 1431462 describes the use of a continuous jet process to image a coated plate by hardening the coating with a reactive ink. The unhardened background areas are then washed away. JP56105960 to Nakayama et al., assigned to Fuji Photo Film (1981) includes the use of heat activated hardening material in oleophilic ink-jet inks, forming the image areas on hydrophilic substrates. The substrate may or may not be coated.

Although the idea of plate-making by inkjet has a long history, commercial success in the field has been limited by the lack of maturity of the inkjet process itself. It has been difficult to ensure that ink nozzles fire consistently and do not experience blockages. An artifact that appears on one ink jet copy may not appear on the next copy. However, if the "copy" is then used as an offset lithographic plate, any artifact that appears on that copy will continue to appear on each and every impression produced from this plate by the offset printing press.

Development of inkjet plate-making followed the technological developments in inkjet. US Pat. No. 4,833,486 by Zerillo (assigned to Dataproducts) utilizes a hydrophobic solid ink-jet ink (containing waxes) which is held at a sufficiently high temperature to jet it through a DOD head (this solid ink technology is more fully described in US Pat. Nos. 4,390,369, 4,484,948, and 4,593,292). The substrate is a hydrophilic offset blank ― either paper or aluminum - onto which the image is jetted. When the ink hits the plate it immediately cools and solidifies. One problem of such an approach is the difficulty of obtaining sufficiently good adhesion of the waxes of the ink to the plate to run multiple impressions during lithographic printing.

EP503621 (Applicant NIPPON PAINT CO) contains two approaches. One approach describes jetting inks onto a pre-sensitized plate, which then needs further treatment including a developing stage with a liquid developer. The other approach uses a non-presensitized blank and the inkjet ink is photosensitive so that it can be hardened on the plate.

EP533168 by Nippon describes the use of a photopolymeric-based inkjet ink together with an ink absorbing layer on the litho plate surface.

EP697282 by Leanders (Agfa) describes a two-component system whereby one reactive component is in the ink and the other in the litho blank surface, so that when the ink hits the blank it produces an oleophilic reduced silver image that can be used in the offset printing process.

US Pat. No. 5,495,803 by Gerber describes imaging a coated, pre-sensitized plate with a UV opaque hot melt inkjet ink and using the ink as a photo-mask to expose the plate . The unexposed pre-sensitized polymer and the ink are subsequently removed by washing.

US Pat. No. 5,738,013 by Kellet describes an ink-jet plate-making process involving the use of a reactive inkjet ink, which is bonded to the litho blank surface by a chemical reaction activated by radiant energy. This assumes that such inks have very good stability at room temperature so that no jet blocking will occur, yet have good reactivity at high temperatures so that the ink becomes insoluble with good adhesion to the offset plate and with good oleophilic properties.

Because the basic principles of inkjet imaging of printing plates have been so well covered by prior art, most recent patents have been confined to very specific ways of achieving such plates. Thus Kato et al. utilize oil-based inks of a variety of types in plate formation (US Pat. Nos. 6,106,984, 6,174,936, 6,184,267 and 6,197,841). In US Pat. No. 5,820,932 - Hallman et al (Sun Chemicals) describe a variety of reactive inks and processes, using two inkjet heads forming the print image on a plate substrate.

Newington et als. (WO 00/37254) and Nitzan et als (WO 01/49506) both use aqueous emulsions as the ink jet fluids. These emulsions have oleophilic particles dispersed in aqueous media and are suitable for ink jetting. On deposition onto the hydrophilic substrate, which is anodized aluminum, the emulsion particles coalesce, forming an insoluble oleophilic image. Such an image can be hardened by heating to increase the adhesion of the image to the plate surface, thus giving a larger number of acceptable printing impressions. Nitzan claims better control of dot size by providing a thin cationic surfactant coating on the surface of the anodized aluminum.

US Pat. No. 6,471,349 (Aurenty et al.) describes jetting a non-aqueous ink onto an anodized aluminum substrate, which may or may not be further treated. The ink adheres both physically and chemically to the surface of the substrate. US Pat. No. 6,472,054 (also by Aurenty et al.) uses aqueous or non-aqueous inks containing partially neutralized acidic polymers to form the image, which is described as bonding to the plate substrate in a manner similar to that of the previously mentioned patent.

Methods involving the use of uncoated anodized aluminum suffer from the problem of poor surface stability. The surface of uncoated anodized aluminum is oxidized with time and loses its hydrophilic properties. This effect is well known in the art. Normally, a pre-sensitized plate is sold with the anodized aluminum surface entirely covered and thus protected from oxidation. The anodized aluminum surface becomes exposed as background after developing. If the printing plate is stored for further printing, the anodized aluminum surface must be preserved from oxidation by the application of a layer of gum or gum substitute. Another disadvantage of using uncoated anodized aluminum onto which ink-jet ink is jetted to form printing plates is that the highly hydrophilic nature of the surface and the uneven graining which is present to give good fount retention increase the spreading of the ink-jet ink on the plate surface, with a loss of resolution. The cationic layer as described by Nitzan for improving resolution will not prevent the surface oxidation effect. Where the plates described in patents mentioned above use uncoated anodized aluminum on which to jet the ink, the same problem will occur.

Methods of ink jet plate-making such as that described in Pat. No. 6,315,916, whereby a pre-sensitized plate has an ink jet image deposited onto it and whereby this image reacts with the sensitized layer, require a subsequent process of development in a processor. Development is a well known method used with standard pre-sensitized plates but it is a method which users would like to avoid. It uses highly alkaline liquids, which may have problems of drainage disposal in many countries. The processing liquid is subject to reaction with the air and must be changed every few weeks; also the processing liquid gradually becomes contaminated with the material it is removing. This often forms a sludge and the processor needs to be thoroughly cleaned out periodically. It is no wonder that the industry is seeking out processless plates. Moreover, pre-sensitized plates used in this inkjet method are light-sensitive and have to be handled in subdued or yellow light.

Methods and compositions for the avoidance of processing the plate have been developed for plates imaged using infra-red radiation. US Pat. Nos. 5,339,737 and 5,353,705 previously referenced describe such processes. In general, where ablation is used for imaging, it is necessary to remove the ablation products. In some cases they may be collected by vacuum but some detritus remains on the plate and must be removed by dry or wet rubbing. In contrast to ablation, US Pat. No. 5,401,611 to Edwards Sr. et al describes a plate which is a very thin silver-based oleophobic layer on top of a hydrophilic layer. Infra red laser radiation converts the oleophilic surface to being hydrophilic. The chemistry involved here is based on silver and the plate manufacturing preparation is complex. This patent represents an early attempt to produce a plate that is processless and where the surface of the plate is switched by imaging radiation from oleophilic to hydrophilic properties. A polymeric surface where the change of water or ink receptive properties occurs under the influence of imaging radiation is now referred to as a switchable polymer and a plethora of patent applications makes manifest the interest in this.

Zheng et al (US Pat. No. 6,413,694) describes switchable polymer layers, whereby oleophilic layers are switched to hydrophilic surfaces, thus describing a positive working switchable polymer plate. In US 2002/0142245, Zheng describes the opposite type of switching from hydrophilic to hydrophobic. Imaging in these patents is by photothermal processes. Examples given in this patent show the utilization of special syntheses to produce key materials for the invention.

Morgan (US Pat. No. 6,063,528) describes infra red switchable polymer layers, whereby hydrophilic layers containing a metallic salt of a fatty acid such as silver behenate and a water soluble polymer as well as infrared absorbable dyes are switched by imaging to oleophilic surface areas. The use of silver in the plate makes it relatively expensive.

Gelbart (US Pat. No. 5,713,287) has proposed the use of the cylinder itself as the plate substitute substrate, whereby a switchable polymer is then sprayed onto the surface, imaged and then used as a printing form. After printing, the coating is removed and the process may be repeated for the next print run. It is preferable that the sprayed polymer contains all of the imaging and printing properties in a single coating.

### SUMMARY OF THE INVENTION

The present invention provides a substrate coated with a layer, such combination constituting an offset lithographic printing blank onto which is jetted an ink jet fluid, such that the image-to-background surface difference provides a hydrophilic/oleophilic contrast which may be utilized as an offset lithographic printing plate.

The present invention further provides hydrophilic coatings of the substrate which act as suitable receptors for aqueous-based oleophilic ink jet fluids, that after imaging form offset lithographic printing plates. Such plates need no post imaging processing, other than optional heating.

The present invention further provides a simple method of producing offset lithographic printing plates, by imaging with aqueous ink jet fluids that contain either microencapsulated pigments or pigment/resin combinations that will bond to suitable hydrophilic surfaces of offset lithographic printing blanks to form offset lithographic printing plates with oleophilic ink jet images. Such plates need no post imaging processing, other than optional heating.

The present invention further provides a simple method of producing an offset lithographic printing plate by means of the ink jet process using particular coated substrates which can be switched from being hydrophilic to being oleophilic or vice versa by a switching material situated in the jetted aqueous inkjet fluid. Such plates need no post imaging processing, other than optional heating.

### DETAILED DESCRIPTION OF THE INVENTION

Although, nowadays offset lithographic printing may be done by either waterless or conventional wet processes, this patent is confined to what may now be referred to as the wet process. This refers to the older traditional offset lithographic printing process which works using both fount solution and ink.

In one embodiment, the essential components of this invention are a hydrophilic coating combined with a aqueous ink-jet ink, in which is incorporated a switching chemical that on contact with the substrate coating, with or without heating, causes the substrate coating to switch from hydrophilic to oleophilic in the image areas.

The features of the substrate coating used for this embodiment are described below. Preferably, the coating used is made up of commercially available materials and does not contain any specially synthesized components. This minimizes costs and eliminates the need to have new chemicals enduring long and expensive processes that are now in place to ensure that the materials are safe to use from environmental and health considerations. Preferably, all of the ingredients have been tested for environmental and health suitability. The solvent used to apply the coating is water ― once again with environmental and health considerations in mind. The coating used contains a number of essential components. These are as follows:

Polyvinyl alcohol. This is a material available from a number of suppliers and in a variety of grades defined by such properties as molecular weight. It should be present in between 1% and 15% by weight of the total solid content of the layer and is preferably at 3% to 6%. It is dissolved in water and added to the formulations as a solution. The preferred grade has a relatively low molecular weight (22,000), but higher molecular weights can be used.

Polyacrylic acid. It should be present in between 20% and 60% of the total solids by weight- preferably within the range of 20% to 40%. This too is a material generally available and can be obtained in a number of grades distinguished once again by molecular weight. Here again, a low molecular weight (35,000) is preferable and is purchased and used as an aqueous solution.

Oleophilic/hydrophobic water-based emulsion. Although the coating is designed to be hydrophilic, it has been found that such emulsions that might be claimed to be oleophilic, hydrophobic and water resistant are an essential as part of the system to give a combination of hydrophilic properties combined with resistance to the fount solution. The polyvinyl alcohol and the polyacrylic acid as such are water soluble and without other ingredients any coating containing just these ingredients would be washed away by the fount solution in the printing process.

Such emulsions must be present in amounts from 25% to 55% by weight of the solids. Only emulsions with a PH of 7 or less can be used, as those of higher pH do not show good compatibility in the system. Examples of emulsions are those based on vinyl acrylics. For instance, Flexobond 325 is a vinyl acetate-acrylate copolymer with a pH range of 4 to 6. It is recommended for water resistance. Wallpol 40-36 is a vinyl acrylic latex polymer with a pH of 5.0 , is used in paints and is described as high scrub. Both of these emulsions are particularly of use in this system. The preferred emulsions are those incorporating phenolformaldehyde. Examples of these are GPRI BKUA-2370 phenolic resin dispersion and SMD 3405 phenolic resin dispersion.

Wetting agent. It is well known that such ingredients are essential to the production of good coating properties on substrates. However, it has been found that silicone surfactants such as the polyether modified polydimethyl siloxane BYK346 contribute to the hydrophilic properties of the coating and therefore such materials should be present in amounts from 0.5% to 7% of the total solids by weight. Additional wetting agents may also be used including anionic surfactants and non-ionic non silicone surfactants such as ethoxylated sorbitan mono-oleate.

Amino resin cross-linkers. Such resins must be water-soluble even if they are supplied as alcohol solutions. Whereas the other ingredients must be acidic, it has been found that this is not essential in the case of the amino resins. These are present in amounts below 10% of the solids by weight and preferably between 2% and 7%. An example of a preferred resin is Cymel UFR-60, which is a urea -formaldehyde resin. It is believed that such resins function in the system by cross-linking primarily with the polyvinyl alcohol. The problem which this type of complex formulation solves is to produce a coating which is hydrophilic and yet is fount resistant. Deviation from the principles of this formulation will produce unsuitable coatings. So, for instance, amounts of aminoplasts exceeding 10% of the dry solids in the formulation give very good adhesion to substrates and also fount resistance, but will not give hydrophilic coatings. In general with formulations containing an aminoplast together with polyvinyl alcohol, adhesion to the substrate is affected by curing at temperatures above 120°C. It is possible to obtain good hydrophilic properties by minimal curing, but then adhesion and fount resistance are poor; or if the temperature is increased, adhesion and fount resistance become excellent, but the coating becomes hydrophobic. In both cases, the total properties make the material unfit for use as an offset printing plate. It has not been found possible to achieve a compromise balance, solely using an aminoplast polyvinyl alcohol system.

Fillers such as fumed silica or clay may be dispersed in the mixture with the intention of enhancing the cleanliness of background areas and strengthening of inked image on the printing press impressions.

It has been found that coatings with the ingredients balanced as specified give films that are especially strongly bonded to anodized aluminum and to completely untreated aluminum and can be heated to temperatures in the range of 160°C to give optimum adhesion and fount resistance combined with excellent hydrophilic properties. When the coating is made, it may be dried by merely evaporating the water used as the carrier fluid or may be fused at 160°C. Fusing is best done after imaging, as lower temperatures during coating facilitate manufacturing and post-imaging fusing tends to enhance oleophilic properties of the images and bond the images to the plate.

It has been found that cross-linking catalysts usually used in conjunction with aminoplasts to promote cross-linking, such as para-toluene sulfonic acid and Cycat 4045 ―an amine hindered catalyst, are unsuitable for this application. It is possible that catalysis by these materials produces too much cross-linking at higher temperatures and that -COOH groups of the polyacrylic acid produce a very weak catalytic action that by good fortune produces the excellent hydrophilic adhesion balance required. As will be described, the conventional cross-linking catalysts for the aminoplast systems can be used in the ink to switch the coating from being hydrophilic to being oleophilic - an indication that the mechanism described above may be the correct one.

It is a preferred type of formulation where each and every ingredient has been tested and given some kind of approval rating by an authorized authority. Coatings made from the above defined ingredients are applied to typical printing plate substrates such as grained anodized aluminum, polyester and aluminum. Untreated aluminum is the preferred substrate as it is less expensive than grained anodized and metal-based plates are preferred to polyester plates by many printers. However, anodized aluminum or aluminum with treatments such as immersion in phosphoric acid are also suitable.

Coating weight of the hydrophilic layer is between 0.3 and 6 grams per square meter and is preferably in the range 1 to 4 grams per square meter. It has been found that a diverse selection of water-soluble materials can be used to switch the coating from being hydrophilic to being oleophilic. Materials were tested by dissolving the chemical under test in water to give a 6% by weight solution. It was then applied to the coated substrate by writing with a wooden tooth-pick. The imaged plate was then heated at 160°C for 4 minutes and then rubbed successively with fount and litho ink. Where there was writing, if the chemical caused a switch it became oleophilic and took ink. Of the materials tried on this test, sulphonic acids appeared to act as switches, whereas carboxylic acids did not. Iron and copper salts appeared to work. Whilst no overall theory is advanced, it is possible that the switching materials specifically catalyse a cross-linking reaction between the aminoplast and the polyvinyl alcohol and the resulting cross-linked molecules are then oleophilic.

It is possible to incorporate small quantities of these switching materials into ink-jet inks. These materials must be readily soluble in water and compatible with other ink-jet ink ingredients, so that they can be easily dissolved in the aqueous ink-jet ink, without any danger of subsequent precipitation, which would cause inkjet nozzles blockage. This may be done using commercially available aqueous inkjet inks -either dye based or pigment based or can be used in specially formulated inks starting from scratch. Resulting inks may be suitable for either DOD ink jet printing or continuous ink jet printing.

In an alternative embodiment, the identical hydrophilic substrate coatings may be used in ink-jet inks, wherein the ink itself provides the hydrophilic surface and the unimaged substrate provides the oleophilic areas. In such an embodiment hydrophilic substrates such as anodized aluminum are inappropriate.

In order to produce satisfactory offset lithographic inkjet printing plates, suitable inkjet inks must be used. It has been found that aqueous pigment based inks can be used and those based on micro-encapsulation of the pigment are particularly suitable as they give sharp images on the above described substrates and can be fused to give highly oleophilic tough images. Microencapsulated pigments have not hitherto been used to produce offset printing plates. Aqueous ink-jet inks based on these pigments are described in IS&T papers at NIP18, 2002 International Conference on Digital Printing Technologies (Minoru Dsui et als. Page 369 to 373 and Isao Tsuru et. Als. P374 to 377). It is likely that the excellent printing properties of such inks is because when they are fused into the substrate both the water insoluble polymer and its encapsulated pigment are fixed together. This may be more effective than emulsion or latex based inks, where the pigment is not necessarily incorporated into the emulsion or latex polymer to the same extent. It is possible to use colored inks as well as black inks and a printer who wishes to prepare a set of color separations may do so by preparing each separation from the corresponding colored ink. This way, once the plates have been prepared, they cannot be confused, avoiding the possibility of printing a separation with the wrong colored ink.

Such systems as described above can be adapted for imaging directly on the printing press and for use as the basis of a computer-to-press application. Such an application was described in the IS&T NIP14 1998 International Conference on Digital Printing Technologies by Huber et als (page 646). Huber describes the use of hot melt ink, ink-jetted onto anodized aluminum. He attempted to use the master cylinder of a printing press for printing by means of the phase-change ink-jet ink on the surface. After the printing run was completed, the image was erased and a new image produced. The application that he worked on was only able to produce 100 impressions. It is possible, using the present invention, to spray the hydrophilic coating onto an unanodised aluminum on a master cylinder, to ink jet image it, fuse on the image and run multiple impressions. The substrate can be cleaned with an aqueous solution of an ethanolamine, washed and dried and re-used over and over again.

In a further embodiment, it is also possible to combine a microencapsulated pigmented ink or pigmented ink with an ink switchable material. Both the microencapsulated pigmented ink or the standard pigmented ink contribute to the oleophilic nature of the image to aid printing.

In a further embodiment, the substrate coating may be made oleophilic and the switching ink may be made hydrophilic. Here the ink jet ink or fluid should not contain pigment or resin which may have a tendency to make the ink oleophilic. It should contain a hydrophilic switching material and may also contain a colorant in the form of a dye for image visibility. The substrate coating may have a similar composition to the hydrophilic coating, but should have between 10% and 20% of the solids material as aminoplast.

### EXAMPLE I

A 12% solution of polyvinyl alcohol (Molecular weight approximately 22,0000) in de-ionized water was prepared by heating with stirring. A 35% solution of Polyacrylic acid (Average molecular weight 100,000) was used. The following formulation was made up. Ingredients are quoted in parts by weight and were added in the order shown. After each addition the mixture was high speed stirred to ensure good mixing:

| | |
|---|---|
| Polyvinyl Alcohol Solution (12%) | 11.07 parts |
| Polyacrylic Acid (35%) | 23.31 parts |
| Water | 39.28 parts |
| GPRI BKUA-2370 (55%) | 22.59 parts |
| BYK 346 | 1.10 parts |
| Cymel UFR-60 | 1.51 parts |
| Aerosil OT | 1.14 parts |

The mixture was coated onto 150 micron thick aluminum foil and dried in the oven at 120°C for 4 minutes, giving a total dry weight coating thickness of approximately 2.53 grams per square meter.

An Epson T5441 dye based black ink was modified by the addition of 0.16% by weight of ferric nitrate and used in an Epson Stylus 7600 ink jet printer. The sheet prepared above was passed through the four color printer using only the modified black ink. The resulting imaged plate was heated to 160°C for 4 minutes and then run on a Heidelberg GTO printing press to give 25,000 clear good impressions.

### EXAMPLE II

The following formulation was made up. Ingredients are quoted in parts by weight and were added in the order shown. After each addition the mixture was high speed stirred to ensure good mixing. The polyvinyl alcohol and polyacrylic acid solutions are the same as used in Example I:

| | |
|---|---|
| Polyvinyl Alcohol Solution (12%) | 10.01 parts |
| Polyacrylic Acid (35%) | 23.23 parts |
| Water | 26.06 parts |
| GPRI BKUA-2370 (55%) | 22.49 parts |
| BYK 346 | 1.08 parts |
| Cymel UFR-60 | 1.49 parts |
| Aerosil OT(19.83%) | 5.69 parts |
| Kaolin | 9.68 parts |

Aluminum foil was washed with methyl ethyl ketone and then emersed in phosphoric acid for 5 minutes then washed with water and dried. The above mixture was coated onto the 150 micron thick aluminum foil and dried in the oven at 120°C for 4 minutes, giving a total dry weight coating thickness of approximately 2.53 grams per square meter.

An Epson Stylus C82 black ink which contained a microencapsulated pigment was used in an Epson Stylus 7600 ink jet printer. The coated foil prepared above was passed through the four color printer using only the C82 black ink. The resulting imaged plate was heated to 160°C for 4 minutes and then run on a Heidelberg GTO printing press to give 25,000 clear good impressions with no sign of print or background deterioration.

### EXAMPLE III

The following formulation was made up;

| | |
|---|---|
| Polyvinyl Alcohol Solution (12%) | 3.38 parts |
| Polyacrylic Acid (35%) | 23.05 parts |
| Water | 50.54 parts |
| GPRI BKUA-2370 (55%) | 11.22 parts |
| BYK 346 | 1.10 parts |
| Cymel UFR-60 | 4.51 parts |
| Aerosil OT(19.83%) | 6.19 parts |

This formulation contains 16.43% by dry weight of the Cymel UFR-60 resin. The mixture was coated and dried at 120°C to a dry weight of 3.07 grams per square meter.

An Epson T5441 dye based black ink was modified by the addition of 0.336% by weight of dry polyacrylic acid and used in an Epson Stylus 7600 ink jet printer. The sheet prepared above was passed through the four color printer using only the modified black ink. The unimaged areas were oleophilic and the imaged areas were switched to being hydrophilic.

### Sources of Raw Materials

BYK 346. BYK-Chemie GmbH, Postfach 100245, Wesel
Cymel UFR-60 Cytec Industries. Five Garret Mountain Plaza, West Patterson,
NJ. USA
Aerosil OT. Dioctyl ester of sodium sulfosuccinic acid from BDH Laboratory
Supplies, Poole, England.
GPRI BKUA-2370 phenolic resin dispersion Georgia-Pacific, Atlanta Georgia,
USA SMD 3405 phenolic resin dispersion. Schenectady Europe, Wolverhampton, UK.

Other aspects of the present invention my be defined by the following clauses:
Clause 1. A lithographic printing blank comprising a coating deposited from aqueous fluid onto a substrate, the coating comprising: polyvinyl alcohol ; polyacrylic acid ; hydrophobic water-based emulsion with pH of 7 or below ; aminoplast ; and at least one wetting agent.
Clause 2. The lithographic printing blank of clause 1, wherein the coating is hydrophilic.
Clause 3. The lithographic printing blank of clause 1, wherein the coating is oleophilic.
Clause 4. The lithographic printing blank of clause 1, wherein the aminoplast is a urea-formaldehyde resin.
Clause 5. The lithographic printing blank of clause 1, wherein the hydrophobic water- based emulsion has a phenol formaldehyde as its internal phase.
Clause 6. The lithographic printing blank of clause 1, wherein the hydrophobic water- based emulsion has an acrylic polymer or copolymer as its internal phase.
Clause 7. The lithographic printing blank of clause 1, wherein the coating has a dry coating weight between 1 gram per square meter and 4 grams per square meter.
Clause 8. The lithographic printing blank of clause 1, wherein the polyacrylic acid is present at between 20% and 60% of the dry coating weight.
Clause 9. The lithographic printing blank of clause 8, wherein the polyacrylic acid is present at between 20% and 40% of the dry coating weight.
Clause 10. The lithographic printing blank of clause 1, wherein the polyvinyl alcohol is present at between 1 % and 15% of the dry coating weight.
Clause 11. The lithographic printing blank of clause 10, wherein the polyvinyl alcohol is present at between 3% and 6% of the dry coating weight.
Clause 12. The lithographic printing blank of clause 1, wherein the hydrophobic water- based emulsion is present at between 25% and 55% of the dry coating weight.
Clause 13. The lithographic printing blank of clause 1, wherein the wetting agent comprises silicone surfactant.
Clause 14. The lithographic printing blank of clause 1, wherein the at least one wetting agent is present at between 0.5% and 7% of the dry coating weight.
Clause 15. The lithographic printing blank of clause 2, wherein the aminoplast is present at not more than 10% of the dry coating weight.
Clause 16. The lithographic printing blank of clause 15, wherein the aminoplast is present at between 2% and 7% of the dry coating weight.
Clause 17. The lithographic printing blank of clause 3, wherein the aminoplast is present at between 10% and 20% of the dry coating weight.
Clause 18. The lithographic printing blank of clause 1, wherein the substrate comprises untreated aluminum.
Clause 19. The lithographic printing blank of clause 18, wherein the substrate comprises aluminum treated with phosphoric acid.
Clause 20. The lithographic printing blank of clause 18, wherein the substrate comprises anodized aluminum.
Clause 21. A method of preparing a lithographic printing plate, comprising the steps of: providing a printing blank comprising a coating deposited from aqueous fluid onto a substrate, the coating comprising: polyvinyl alcohol ; polyacrylic acid; hydrophobic water-based emulsion with pH of 7 or below ; aminoplast ; and at least one wetting agent; depositing aqueous ink-jet ink onto said coating in the form of an image, whereby the imaged areas of said coating acquire oleophilic or hydrophilic properties which are opposite to the oleophilic or hydrophilic properties of said printing blank.
Clause 22. A method according to clause 21, additionally comprising the step of heating said printing plate, after said step of depositing.
Clause 23. A method according to clause 21, whereby the aqueous ink-jet ink forms an oleophilic image.
Clause 24. A method according to clause 21, whereby the aqueous ink-jet ink forms a hydrophilic image.
Clause 25. A method according to clause 21, wherein the ink-jet ink contains a microencapsulated pigment.
Clause 26. A method according to clause 21, wherein the ink-jet ink contains a pigment and polymer binder.
Clause 27. A method according to clause 21, wherein the ink-jet ink contains a water soluble ingredient which switches the coating from being hydrophilic to oleophilic.
Clause 28. A method according to clause 21, wherein the ink-jet ink contains a water soluble ingredient which switches the coating from being oleophilic to hydrophilic.
Clause 29. The method of clause 28, wherein the substrate comprises aluminum treated with phosphoric acid.
Clause 30. The method of clause 28, wherein the substrate comprises anodized aluminum.
Clause 31. ink-jet ink comprising switchable material.
Clause 32. The ink-jet ink of clause 31, wherein said switchable material comprises water-soluble ingredients.
Clause 33. The ink-jet ink of clause 31, wherein said switchable material is operable to switch a hydrophilic inked substrate to being oleophilic.
Clause 34. The ink-jet ink of clause 32, wherein said switchable material is ferric nitrate.
Clause 35. The ink-jet ink of clause 32, wherein said switchable material is a sulphonic acid.
Clause 36. The ink-jet ink of clause 31, wherein said switchable material is operable to switch an oleophilic inked substrate to being hydrophilic.
Clause 37. The ink-jet ink of clause 35, wherein said switchable material is polyacrilic acid.
Clause 38. A lithographic wet printing process comprising the steps of: providing a lithographic printing plate comprising a substrate coated with a coating comprising: polyvinyl alcohol ; polyacrylic acid; hydrophobic water-based emulsion with pH of 7 or below ; aminoplast ; and at least one wetting agent; said coating having been imaged using aqueous ink-jet ink, whereby the imaged areas of said coating acquired oleophilic or hydrophilic properties which are opposite to the oleophilic or hydrophilic properties of said printing blank ; and using said lithographic printing plate in a wet-lithographic printing press to produce printed impressions.
Clause 39. The lithographic wet printing process of clause 38, wherein said substrate comprises a master cylinder of said printing press.

## Claims

1. Ink-jet ink comprising switchable material.

2. The ink-jet ink of claim 1, wherein said switchable material comprises water-soluble ingredients.

3. The ink-jet ink of claim 1, wherein said switchable material is operable to switch a hydrophilic inked substrate to being oleophilic.

4. The ink-jet ink of claim 3, wherein said switchable material is ferric nitrate.

5. The ink-jet ink of claim 3, wherein said switchable material is a sulphonic acid.

6. The ink-jet ink of claim 2, wherein said switchable material is operable to switch an oleophilic inked substrate to being hydrophilic.

7. The ink-jet ink of claim 6, wherein said switchable material is polyacrilic acid.
